# EUROPÄISCHE PATENTSCHRIFT

(11) **EP 1 750 881 B1**
(45) Veröffentlichungstag und Bekanntmachung des Hinweises auf die Patenterteilung: **29.10.2008**
(21) Anmeldenummer: 05745083.5
(22) Anmeldetag: 03.05.2005
(51) Int. Cl.: B23D 77/02, B23D 77/04

(54) **REIBAHLE**
REAMER
ALESOIR

(30) Priorität: 04.05.2004 DE 102004022941
(43) Veröffentlichungstag der Anmeldung: 14.02.2007
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HAEBERLE, Friedrich, 73466 Lauchheim (DE)
(74) Vertreter: Gleiss, Alf-Olav
(86) Internationale Anmeldenummer: PCT/EP2005/004774
(87) Internationale Veröffentlichungsnummer: WO 2005/105355

(56) Entgegenhaltungen:
- EP-A- 0 410 104
- DE-A1- 4 007 175
- DE-A1- 10 033 012
- DE-C1- 3 201 508
- GB-A- 2 302 295
- US-A- 3 203 493

## Beschreibung

Die Erfindung betrifft eine Reibahle gemäß Oberbegriff des Anspruchs 1, wie sie aus der DE 4 007 175 bekannt ist.

Reibahlen der hier angesprochenen Art sind bekannt. Messerplatten werden in den Grundkörper einer derartigen Reibahle eingesetzt, der mit einer Nut versehen ist. Zur Fixierung der Messerplatte in der Nut ist eine Spanneinrichtung vorgesehen. Der radiale Überstand der Messerplatte über die Umfangsfläche des Reibahlenkörpers beziehungsweise über gegebenenfalls vorgesehene Führungsleisten wird durch eine Justiereinrichtung eingestellt. Messerplatten der hier angesprochenen Art weisen eine in Vorschubrichtung des Werkzeugs geneigte Haupt- und eine in entgegengesetzter Richtung abfallende Nebenschneide auf. Die Verjüngung liegt üblicherweise im Bereich 1 µm pro 1 mm. Herkömmliche Reibahlen weisen Justiereinrichtungen mit zwei Stellschrauben auf, auf denen die innen liegende Seitenkante der Messerplatte ruht. Mit Hilfe der beiden Stellschrauben wird einerseits der Überstand und andererseits der Abfall der Nebenschneide, die so genannte Verjüngung, eingestellt. Um diese Aufgabe, eine Messerplatte in geklemmtem Zustand gegen eine durch die Spanneinrichtung entstehende Vorspannung zu justieren, optimal durchführen zu können, ist bei einer bekannten Reibahle eine Messerplatte vorgesehen, die eine Spannnut mit Spannflächen aufweist, die gegenüber der Vorderseite der Messerplatte unter einem Winkel abfallen. Die Messerplatten bekannter Systeme müssen eine gewisse minimale Baulänge aufweisen, damit zwei Justierelemente und eine Spanneinrichtung vorgesehen werden können. Bei den bekannten Spanneinrichtungen treten keine Spannkräfte auf, die in axialer Richtung, wirken. Bei einem Wechsel der Messerplatte muss deshalb besonders sorgfältig auf eine exakte Axialposition geachtet werden, weil die Hauptschneide in einem bestimmten axialen Abstand vor einer Führungsleiste positioniert sein muss. Es bedarf einiger Übung, die Messerplatte mit Hilfe der beiden Stellelemente exakt in die Position zu bringen, die für die Bearbeitung eines Werkstücks optimal ist. Es hat sich auch herausgestellt, dass die Messerplatte häufig nicht so gehalten wird, dass eine exakte Einstellung möglich ist. Außerdem kann es durch die beiden Justierungen und die Spanneinrichtung bedingte lange Baulänge der Messerplatte zu einer Durchbiegung kommen, die bei falscher Handhabung zu einem Bruch der Platte führen kann.

Aufgabe der Erfindung ist es daher, eine Reibahle zu schaffen, mit deren Hilfe die hier genannten Nachteile vermieden werden.

Zur Lösung dieser Aufgabe wird eine Reibahle vorgeschlagen, die die in Anspruch 1 genannten Merkmale aufweist. Die Reibahle umfasst einen mit mindestens einer Nut versehenen Grundkörper, in die eine Messerplatte einsetzbar ist, die wenigstens eine geometrisch bestimmte Schneide aufweist. Zur Befestigung der Messerplatte ist eine Spanneinrichtung vorgesehen und zur Justierung eine Justiereinrichtung. Die Reibahle zeichnet sich dadurch aus, dass die Justiereinrichtung nur eine Stellschraube aufweist, die direkt oder über einen Justierkeil auf ein erstes Ende der Messerplatte einwirkt. Das andere Ende der Messerplatte liegt unmittelbar am Grund der Nut auf.

Die Reibahle zeichnet sich außerdem dadurch aus, dass die Klemmpratze der Spanneinrichtung eine Spannlippe aufweiset, die in eine geneigte Spannnut der Messerplatte eingreift und deren der Spannschraube abgewandte Kante gegenüber einer parallel zur Drehachse der Reibahle verlaufenden gedachten Horizontalen unter einem Winkel (β) von ca. 10° geneigt ist. Hierbei ist es wichtig, dass die Spanneinrichtung so ausgestaltet ist, dass eine Spannkraft entsteht, die größer ist als die Kräfte, die bei der Zerspanung an der Schneide der Messerplatte wirken, um sicher zu verhindern, dass sich während der Bearbeitung der Werkzeugdurchmesser oder die Verjüngung, also die Neigung der Nebenschneide durch eine Setzbewegung verändern. Bei der radialen Einstellung der Messerplatte bedarf es lediglich der Betätigung der einen einzigen Stellschraube, was den Einstellvorgang wesentlich vereinfacht. Außerdem ergibt sich aus dieser Ausgestaltung die Möglichkeit, einer sehr kompakten Bauweise, die für die Stabilität des Gesamtsystems vorteilhaft ist.

Weitere Ausgestaltungen der Reibahle ergeben sich aus den Unteransprüchen.

Die Erfindung wird im Folgenden anhand der Zeichnungen näher erläutert. Es zeigen:
- Figur 1: eine Messerplatte in Draufsicht;
- Figur 2: einen Querschnitt durch die Messerplatte gemäß Figur 1;
- Figur 3: eine Prinzipskizze einer Messerplatte mit einer Spanneinrichtung sowie einer Justiereinrichtung und
- Figur 4: eine perspektivische Prinzipskizze einer Reibahle mit einer Messerplatte nach den Figuren 1 und 2.

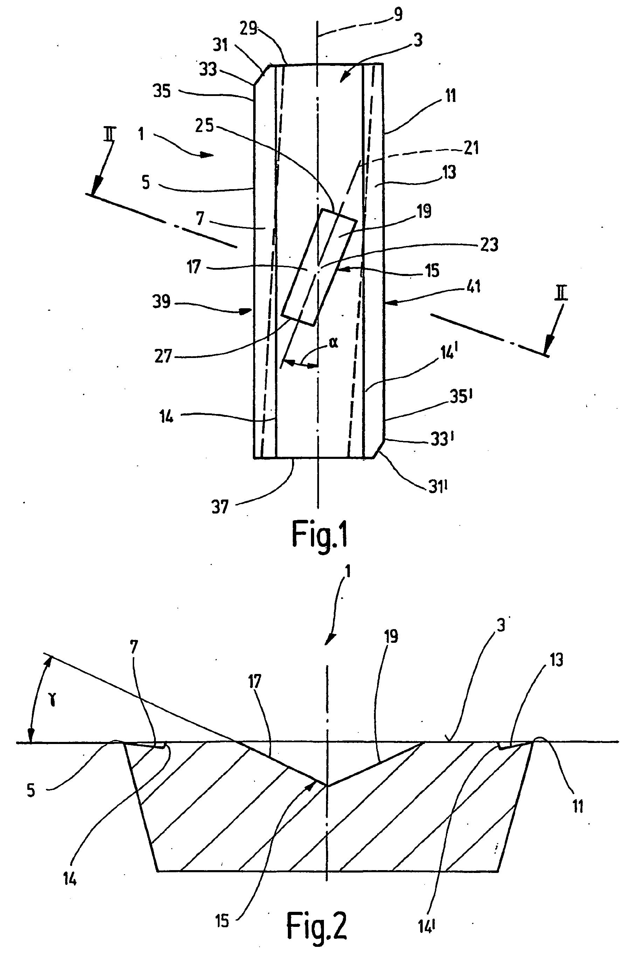

Die in Figur 1 dargestellte Messerplatte 1 weist in Draufsicht gesehen eine lang gestreckte, rechteckige Grundform auf und zeigt eine rechteckige Vorderseite 3. Entlang einer ersten Längskante 5 verläuft eine Spanfläche 7. Vorzugsweise ist die Messerplatte im Wesentlichen symmetrisch ausgebildet und weist eine Mittellinie 9 auf. Parallel zur ersten Längskante 5 verläuft eine zweite Längskante 11 und entlang dieser eine zweite Spanfläche 13. Die erste und zweite Spanfläche 7, 13 werden jeweils durch eine Spanleitstufe 14, 14' begrenzt. Während die Spanflächen 7, 13 ausgehend von den zugehörigen Längskanten 5, 11 in Richtung auf die Rückseite der Messerplatte 1 abfallen, steigen die Spanleitstufen 14, 14' in Richtung auf die Vorderseite 3 an. Im mittleren Bereich der Vorderseite 3 zwischen den Spanflächen 7 und 13 liegt eine Spannnut 15 mit mindestens einer, hier zwei Spannflächen 17 und 19. Die Spannnut 15 ist symmetrisch zu einer Mittelachse 21 ausgebildet, die mit der Mittellinie 9 der Messerplatte 1 einen Winkel α von ca. 10° einschließt.

Die Spannnut 15 ist punktsymmetrisch angeordnet zu dem Schnittpunkt 23 der Mittellinie 9 und der Mittelachse 21.

Die entlang der Mittelachse 21 gemessene Länge der Spannnut 15 ist vorzugsweise so gewählt, dass diese ausschließlich im mittleren Bereich der Vorderseite 3 angeordnet ist und die Spanflächen 7 und 13 nicht schneidet. Vielmehr ist die Spannnut rundum geschlossen und weist an ihren Schmalseiten 25 und 27 gegenüber der Vorderseite 3 eine Stufe auf. Diese Ausgestaltung bietet den Vorteil, dass unter eine in die Spannnut 15 eingreifende Klemmpratze, die hier nicht dargestellt ist, keine Späne eindringen können und damit ein optimaler Halt der Messerplatte 1 am Grundkörper einer Reibahle gesichert ist. Außerdem ist die Messerplatte 1 durch diese Gestaltung stabiler und kann durch Justier- und Haltekräfte weniger stark durchgebogen werden.

An der in Figur 1 dargestellten oberen linken Ecke der Messerplatte 1 ist eine Abschrägung vorgesehen, das heißt die Längskante 5 reicht nicht bis an die obere Stirnseite 29 der Messerplatte 1 heran, sondern fällt vorher unter einem Winkel zur Mittellinie 5 ab. Dieser in Richtung zur Stirnseite 29 abfallende Bereich bildet die geometrisch bestimmte Hauptschneide 31 der Messerplatte 1, die über einen Scheitelpunkt 33 in eine geometrisch bestimmte Nebenschneide 35 übergeht, die von dem sich an den Scheitelpunkt 33 anschließenden Bereich der Längskante 5 gebildet wird. Bei Verwendung der Messerplatte 1 wird diese so in ein Werkzeug eingesetzt, dass die Nebenschneide 35 in Richtung auf die Drehachse des Werkzeugs abfällt und zwar üblicherweise um etwa 1 µm auf 1 mm.

Die Messerplatte 1 ist bezüglich des Schnittpunkts 23 ebenfalls punktsymmetrisch ausgebildet. An der diagonal gegenüber liegenden Ecke der Messerplatte ist also ebenfalls eine Hauptschneide 31' vorgesehen, die ausgehend von der zweiten Längskante 11 in Richtung auf die Stirnseite 37 abfällt Die Hauptschneide 31' geht über einen Scheitelpunkt 33' in eine Nebenschneide 35' über, die in Gegenrichtung zur Hauptschneide 31' geneigt ist und zur Stirnseite 29 abfällt. Die hier angesprochene punktsymmetrische Ausgestaltung einer Messerplatte 1 mit zwei diagonal einander gegenüber liegenden Schneidenbereichen ist grundsätzlich bekannt. Eine derartige Messerplatte 1 wird als Wendeplatte bezeichnet. Wenn die Hauptschneide 31 und Nebenschneide 35 verschlissen sind, kann die Messerplatte 1 um eine senkrecht auf der Vorderseite 3 durch den Schnittpunkt 23 führende gedachte Achse um 180° gedreht werden, so dass dann die Hauptschneide 31' und die Nebenschneide 35' für die spanende Bearbeitung eines Werkstücks zur Verfügung stehen.

Üblicherweise sind die Stirnseiten 29 und 37 gegenüber der Vorderseite 3 in einem Winkel von 90° angeordnet, sie fallen also bei der Darstellung gemäß Figur 1 senkrecht in die Bildebene von Figur 1 ab. Dagegen sind die sich an die Längskanten 5 und 11 anschließenden Seitenflächen 39 und 41 in einem Winkel von < 90° geneigt, sie fallen zur Mittellinie 9 hin ab. Betrachtet man also die Messerplatte 1 von der Stirnseite 29, so ist sie im Wesentlichen trapezförmig ausgebildet, wobei die in Figur 1 sichtbare Vorderseite 3 quer zur Mittellinie 9 breiter ist als die der Vorderseite 3 gegenüber liegende und parallel zu dieser verlaufende Rückseite der Messerplatte 1. Der Winkel, unter dem die Seitenflächen 39 und 41 von der Längskante 5 beziehungsweise 11 aus gesehen abfällt, wird als Freiwinkel bezeichnet.

Bei dem Ausführungsbeispiel gemäß Figur 1 ist vorgesehen, das die Spanleitstufen 14, 14' parallel zu den zugehörigen Längskanten 5, 11 der Messerplatte 1 verlaufen. Damit weisen die Spanflächen 7 und 13, über die Länge der Messerplatte 1 gesehen, eine im Wesentlichen konstante Breite auf. Denkbar ist es aber auch, dass die Spanleitstufen 14, 14' unter einem Winkel gegenüber den zugehörigen Längskanten 5, 11 verlaufen und zwar dergestalt, dass sich die Spanflächen 7 und 13 in Richtung auf die Hauptschneide 31, 31' verbreitern. Die hier angesprochene Ausführungsvariante ist in Figur 1 durch gestrichelte Linien angedeutet.

Durch diese Ausgestaltung werden die Spanleitstufen 14, 14' in Richtung auf die Hauptschneide 31, 31' höher, sodass sich beim Brechen von abgetragenen Spänen ein größerer Wirkungsgrad ergibt. Überdies können aufgrund der sich verbreiternden Spanflächen 7, 13 Späne größerer Dicke von einem Werkstück abgetragen werden, es ergibt sich also eine größere Spantiefe.

Je nach Länge der Messerplatte 1 kann der Winkel, unter dem die Spanleitstufen 14, 14' gegenüber den zugehörigen Längskanten 15, 11 verlaufen, variiert werden. Bei kurzen Messerplatten ist es möglich, dass dieser auch dem Winkel α entspricht, unter dem die Mittelachse 21 der Spannnut 15 gegenüber der Mittellinie 9 der Messerplatte 1 verläuft.

Bei dem Ausführungsbeispiel der Messerplatte 1 gemäß Figur 1 wird davon ausgegangen, dass die Hauptschneide 31, 31' aus dem Grundkörper der Messerplatte 1 herausgearbeitet werden. Denkbar ist es aber auch, in diesen im Bereich der Hauptschneide 31, 31' und der Nebenschneide 35, 35' einen Einsatz aus PKD oder CBN einzusetzen. In diesem Fall verlaufen die Spanflächen 7 und 13 sowie die Spattleitstufen 14, 14' nur über die Länge dieses Einsatzes.

Figur 2 zeigt einen Querschnitt durch die in Figur 1 dargestellte Messerplatte 1, und zwar entlang der in dieser Figur eingezeichneten Linie II-II. Gleiche Teile sind mit gleichen Bezugsziffern versehen, so dass insofern auf die Beschreibung zur vorangegangenen Figur verwiesen wird.

Die Schnittdarstellung zeigt deutlich, dass die Messerplatte 1 einen Grundkörper aufweist, in den die Spannnut 15 eingebracht ist. Diese weist die beiden Spannflächen 17 und 19 auf, die V-förmig zueinander verlaufen und mit der Vorderseite 3 einen Winkel γ von 10° einschließen. An den auch als Flanken der Spannnut 15 bezeichneten Spannflächen 17 und 19 liegt die Spannlippe einer Klemmpratze an, mit der die Messerplatte 1 im Grundkörper einer Reibahle fixiert wird. Darauf wird unten noch näher eingegangen.

Ausgehend von den Längskanten 5 und 11 der Messerplatte 1 erstrecken sich in Richtung der Mittellinie der Messerplatte 1 Spanflächen 7 und 13, die unter einem spitzen Winkel zur Vorderseite 3 verlaufen, also von den Längskanten 5 und 11 aus gesehen nach innen abfallen. Die Spanflächen 7 und 13 enden in Spanleitstufen 14, 14', gegen die von der Messerplatte 1 abgetragene Späne anlaufen und gebrochen werden.

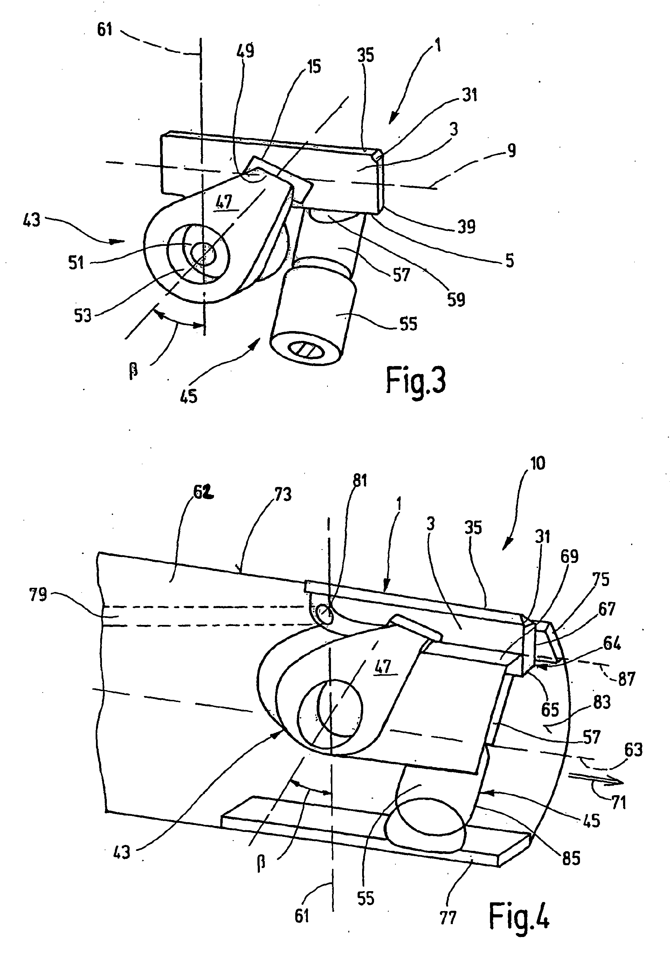

Figur 3 zeigt eine Prinzipskizze der in Figur 1 dargestellten Messerplatte mit einer Spanneinrichtung 43 und einer Justiereinrichtung 45. Die Messerplatte 1 ist dabei stark vereinfacht wiedergegeben.

Die Spanneinrichtung 43 weist eine Klemmpratze 47 auf, die mit einer Spannlippe 49 in die Spannnut 15 eingreift, die auf der Vorderseite 3 der Messerplatte 1 vorgesehen ist und anhand von Figur 1 im Einzelnen erläutert wurde.

Die Spanneinrichtung 43 weist eine Spannschraube 51 auf, die vor zugsweise zwei Gewindeabschnitte aufweist, die sich durch gegenläufige Steigungen auszeichnen. Ein erster Gewindeabschnitt greift in ein Innengewinde, das in einer Durchgangsbohrung 53 vorgesehen ist, die die Klemmpratze 47 durchgreift und der Aufnahme der Spannschraube 51 dient. Der andere Gewindeabschnitt der Spannschraube 51 greift in den Grundkörper einer hier nicht dargestellten Reibahle ein.

Wird die Spannschraube 1 mittels eines geeigneten Werkzeugs in Rotation versetzt, so wird bei einer ersten Drehrichtung die Klemmpratze 43 festgezogen, so dass die Spannlippe 49 mit einer Spannfläche der Spannnut 15 zusammenwirkt. Die dabei aufgebrachten Spannkräfte werden durch die schräge Anordnung der Spannnut 15, die anhand von Figur 1 im Einzelnen erläutert wurde, in zwei Kräfteanteile aufgespaltet: Eine erste Teilkraft wirkt senkrecht zur Mittellinie 9 der Messerplatte 1, eine zweite Teilkraft in Richtung der Mittellinie 9, hier nach links.

Die Justiereinrichtung 45 weist eine Stellschraube 55 auf, die mit ihrem Außengewinde mit dem Innengewinde einer in den Grundkörper einer Reibahle eingebrachten Bohrung zusammenwirkt. Bei einer Drehung der Stellschraube 55 wird diese mehr oder weniger weit in den Grundkörper der Reibahle eingeschraubt, wobei sie entweder direkt auf die auch als Freifläche bezeichnete Seitenfläche 39 der Messerplatte 1 wirkt oder, wie hier dargestellt, über einen Justierkeil 57, der eine Schrägfläche 59 aufweist, die so geneigt ist, dass sie flächig an der Seitenfläche 39 der Messerplatte 1 anliegt und deren Längskante 5, damit die hier vorgesehene Nebenschneide 35, nicht schädigt.

Deutlich erkennbar ist, dass die Justiereinrichtung 45 lediglich eine einzige Stellschraube 55, hier mit einem Justierkeil 57, aufweist.

Dadurch, dass die Spanneinrichtung 43 und die Justiereinrichtung 45 unmittelbar nebeneinander liegen und die Justiereinrichtung 45 nur eine Stellschraube 55 umfasst, kann die Messerplatte 1 in Richtung ihrer Mittellinie 9 sehr kurz ausgebildet werden.

Die kurze Bauweise der Messerplatte 1 wird noch dadurch gefördert, dass die Klemmpratze 47 der Spanneinrichtung 43 gegenüber einer gedachten senkrechten Linie 61, die beispielsweise die Durchgangsbohrung 53 schneidet, unter einem Winkel β von ca. 10° angeordnet und in Richtung zur Justiereinrichtung 45 geneigt ist. Durch die kurze Bauform ergibt sich einerseits ein sehr kurzes Gesamtsystem. Außerdem wird die sehr kurze Messerplatte nicht durchgebogen. Schließlich bleibt die eingestellte Verjüngung, also die Neigung der Nebenschneide, konstant

Bei der Darstellung gemäß Figur 3 wird davon ausgegangen, dass die rechte vordere obere Ecke der Messerplatte 1 eine Hauptschneide 31 und eine Nebenschneide 35 aufweist, wie sie oben anhand von Figur 1 im Einzelnen erläutert wurde.

Figur 4 zeigt eine perspektivische Prinzipskizze einer Reibahle 10 mit einem Grundkörper 62 und einer in diesen eingesetzten Messerplatte 1, wie sie anhand der Figuren 1 bis 3 erläutert wurde. In der hier gewählten Prinzipskizze sind auch die Spanneinrichtung 43 und die Justiereinrichtung 45 erkennbar. Gleiche Teile sind mit gleichen Bezugsziffern versehen, so dass insofern auf die vorangegangene Beschreibung verwiesen wird.

Die Messerplatte 1 ist in einer in den Grundkörper 62 eingebrachte, im Wesentlichen parallel zur Drehachse 63 der Reibahle 10 verlaufenden Nut 64 angeordnet, die einen Grund 65 und eine Seitenfläche 67 aufweist, gegen die die Messerplatte 1 von der Spanneinrichtung 43 angepresst wird. Der Grundkörper 62 der Reibahle 10 ist im Bereich der Vorderseite 3 der Messerplatte 1 abgetragen, so dass ein Spanraum 69 gebildet wird, in den von der Messerplatte 1 abgetragene Späne gelangen

Auch bei der Darstellung gemäß Figur 4 wird davon ausgegangen, dass die rechte vordere Ecke der Messerplatte 1 eine Hauptschneide 31 und eine Nebenschneide 35 aufweist, wie sie oben anhand von Figur 1 im Einzelnen erläutert wurde. Bei der Darstellung gemäß Figur 3 fällt die Hauptschneide 31 in Richtung der durch einen Doppelpfeil 71 gekennzeichneten Vorschubrichtung ab. Entsprechend fällt die Nebenschneide 35 entgegen der Vorschubrichtung zur Drehachse 63 der Reibahle 10 durch entsprechende Anordnung und Einstellung der Messerplatte 1 in der Nut 64 ab.

In die Umfangsfläche 73 der Reibahle 10 sind beispielhaft zwei Führungsleisten 75 und 77 eingesetzt, die der Führung der Reibahle 10 in einer zu bearbeitenden Bohrung dienen.

Gestrichelt ist in Figur 4 noch ein Kühl-/Schmiermittelkanal 79 eingezeichnet, der sich über eine Mündung 81 in den Spanraum 69 öffnet, so dass ein Kühl-/Schmiermedium in der Nähe der Haupt- und Nebenschneiden 31, 35 ausgebracht werden kann.

Aufgrund der anhand von Figur 3 erläuterten Ausrichtung der Klemmpratze 47 gegenüber der Justiereinrichtung 45 kann die Mündung 81 sehr nah an die Schneiden herangebracht werden,

In Figur 4 wird deutlich, dass die Justiereinrichtung 45 näher an der Stirnseite 83 der Reibahle 10 liegt, als die Spanneinrichtung 43.

Zur Funktion der Spanneinrichtung 43 und der Justiereinrichtung 45 ist noch Folgendes festzuhalten:

Die Justiereinrichtung 45 dient dazu, die Messerplatte 1 so einzustellen, dass deren rechte vordere Ecke, also deren Hauptschneide 31 und deren Nebenschneide 35 mehr oder weniger weit in radialer Richtung gegenüber der Drehachse 63 über die Umfangsfläche 73 beziehungsweise die Führungsleisten nach außen verlagert wird, um letztlich den Bearbeitungsdurchmesser der Reibahle 10 einzustellen.

Da lediglich eine einzige Stellschraube 55 vorgesehen ist, die in einer Bohrung 85 im Grundkörper 62 verlagerbar ist, ist die radiale Einstellung der Messerplatte 1 sehr einfach durchführbar.

Die der Aufnahme der Messerplatte 1 dienende Nut 64 weist einen sehr exakt eingebrachten Grund 65 auf, der in einem genau definierten Abstand zur der Umfangsfläche 43 beziehungsweise den Führungsleisten liegt. Damit kann der Grund 65 in dem der Stirnseite 83 abgewandten Bereich der Nut 64 als Widerlager für die Messerplatte 1 dienen. Diese liegt also lediglich im Bereich ihres der Stirnseite 83 zugewandten Endes auf der Stellschraube 55 beziehungsweise dem Justierkeil 57 auf, während sie mit ihrem gegenüberliegenden zweiten Ende, das der Stirnseite 83 der Reibahle 10 abgewandt ist, unmittelbar auf dem Grund 65 aufliegt.

Aufgrund der exakten Fertigung des Grundes 65, insbesondere mit Hilfe von nicht spanenden Bearbeitungsmethoden wie Laserabtragung oder Senkerodierung, ist das zweite Ende der Messerplatte 1 bereits in radialer Ausrichtung gegenüber der Drehachse 63 exakt ausgerichtet, wenn die Messerplatte 1 in die Nut 64 eingebracht wird. Es bedarf lediglich der Einstellung des vorderen, der Stirnseite 83 zugewandten Endes der Messerplatte 1 durch Betätigung der Stellschraube 55.

Grundsätzlich ist es möglich, im Bereich des zweiten Endes der Messerplatte 1, das der Stirnseite 83 der Reibahle 10 abgewandt ist, eine zweite Justiereinrichtung vorzusehen, die in Figur 3 nicht dargestellt ist. Diese dient dazu, einen definierten Anlagepunkt für das zweite Ende der Messerplatte 1 bereitzustellen. Während also bei dem Ausführungsbeispiel nach Figur 3 die Position der Messerplatte 1 dadurch vorgegeben ist, dass diese mit ihrem der Stirnseite 83 zugewandten Ende auf dem Justierkeil 57 der Justiereinrichtung 45 und mit ihrem zweiten Ende auf dem Grund 65 der Nut 64 aufliegt, kann auch eine exakte Position der Messerplatte 1 dadurch gewährleistet werden, dass im Bereich des zweiten Endes eine zweite Justiereinrichtung vorgesehen wird. Diese kann, wie die Justiereinrichtung 45 einen Justierkeil und eine Stellschraube aufweisen. Grundsätzlich ist es aber auch möglich, dass hier nur eine Stellschraube ohne Justierkeil vorgesehen wird. Entscheidend für den Gebrauch der Reibahle 10 ist es, dass der Anlagepunkt für die Messerplatte 1 im Bereich des zweiten Endes durch Einstellung der zweiten Justiereinrichtung einmal vorgegeben wird und dann nicht mehr verändert zu werden braucht. Die Stellschraube der zweiten Justiereinrichtung wird nach einer Ausrichtung der Messerplatte 1 stillgelegt, beispielsweise versiegelt.

Bei einem Wechsel der Messerplatte 1 ergibt sich eine Entlastungsbelegung im Bereich der zweiten Justiereinrichtung, die beispielsweise 8 µ betragen kann. Dies wirkt sich auf die Position einer Messerplatte nach deren Ein- und Ausbau aus. Es ist aber sehrwohl möglich, beim ersten Einstellen einer Messerplatte 1 diese Entlastungsbewegung zu berücksichtigen, sodass es einer Nachjustierung der zweiten Justiereinrichtung bei einem Wechsel der Messerplatte nicht bedarf.

Es ist also möglich, im Bereich des zweiten Endes einer Messerplatte 1 einen definierten Anlagepunkt bereitzustellen, ohne dass es einer aufwendigen Bearbeitung des Grundes 65 der Nut 64 bedürfte.

Es zeigt sich aber deutlich, dass das in Figur 4 dargestellte Werkzeug sehr kompakt gebaut sein und eine kurze Messerplatte 1 aufweisen kann, wenn der Grund 65 der Nut 64 im Bereich des zweiten Endes der Messerplatte 1 einen definierten Anlagepunkt bereitstellt. Es kann nämlich dann auf die oben angesprochene zweite Justiereinrichtung verzichtet werden, was insbesondere bei Werkzeugen mit kleinem Durchmesser von großem Vorteil ist Es bedarf dann aber, wie oben erläutert, einer sehr exakten Bearbeitung des Grundes 65 der Nut 64, um eine exakte Positionierung der Messerplatte 1 in der Reibahle 10 zu ermöglichen.

Nach allem zeigt sich, dass grundsätzlich eine relativ preiswerte Lösung zur Positionierung der Messerplatte 1 bereitgestellt werden kann, indem eine zweite Justiereinrichtung vorgesehene wird, die nach einer ersten Grundeinstellung versiegelt und damit quasi stillgelegt wird. Es ist allerdings davon auszugehen, dass das Werkzeug aufgrund einer derartigen zweiten Justiereinrichtung nicht so kompakt realisiert werden kann, wie dies bei der Reibahle 10 nach Figur 4 der Fall ist.

Durch die unter einem Winkel α angeordnete Spannnut 15, die gegenüber einer gedachten Horizontalen 87 geneigt ist, wird die von der Klemmpratze 47 ausgeübte Spannkraft ein zwei Teilkräfte unterteilt, von denen eine radial nach innen in Richtung auf die Drehachse 63 wirkt und eine nach links gegen einen an dem der Stirnseite 83 abgewandten Ende der Nut 64 liegenden Anschlag, der bei der Darstellung nach Figur 4 nicht sichtbar ist. Die Messerplatte 1 wird also definiert nach links gegen den Anschlag angepresst, wobei die nach links in Richtung der Drehachse 63 wirkende Kraft wesentlich kleiner ist als die radial nach innen wirkende Kraft. Damit wird die Messerplatte 1 exakt im Grundkörper 62 der Reibahle 10 festgespannt, wobei ein gewünschtes Durchmessermaß mit Hilfe der Justiereinrichtung 45 einstellbar ist. Ein Verschleiß der Messerplatte 1 kann mit deren Hilfe ebenfalls ausgeglichen werden. Schließlich ist es noch möglich, wie oben erläutert, die vorzugsweise als Wendeplatte ausgelegte Messerplatte 1 um 180° zu drehen und die anhand von Figur 1 erläuterten Haupt- und Nebenschneiden 31' und 35' so anzuordnen, dass diese wie in Figur 4 dargestellt positioniert sind.

Der Grund 65 der Nut ist gegenüber der Seitenfläche 67 unter einem Winkel > 90° geneigt, er fällt also ausgehend von der Seitenfläche 67 zur Drehachse 63 ab, wobei der Neigungswinkel des Grundes 65 an den Freiwinkel der Messerplatte1 so angepasst ist, dass diese mit der Freifläche, also mit ihrer Seitenfläche 39 an dem Nutgrund 65 anliegt.

Vorzugsweise ist im Übergangsbereich zwischen der Seitenfläche 67 und dem Grund 65 eine Freilegung vorgesehen, um eine exakt definierte Position der Messerplatte 1 zu gewährleisten. Eine derartige Freilegung ist auch im Übergangsbereich zwischen dem Grund 65 und einer der Seitenfläche 67 gegenüberliegenden Seitenfläche der Nut 64 vorgesehen, um eine Beschädigung der Messerplatte 1, insbesondere der Schneiden, auszuschließen.

Durch die exakte Anpassung des Querschnittsprofils der Nut 64, also der Neigung des Grundes 65 gegenüber der Seitenfläche 67 wird erreicht, dass im Bereich der Stirnfläche 63 der Reibahle 10 im eingebauten Zustand der Messerplatte 1 lediglich ein überaus kleiner Spalt vorhanden ist, durch den allenfalls nur geringe Mengen von Verunreinigungen, insbesondere Spanteile, eindringen können. Auf diese Weise wird eine Dejustierung der Messerplatte 1 und eine Fehlfunktion der Justiereinrichtung 45 sicher vermieden.

Figur 4 zeigt noch einmal deutlich, dass die Reibahle 10 sehr kompakt und Raum sparend ausgelegt werden kann, weil erstens lediglich eine nahe der Stirnseite 83 anordenbare Stellschraube 55 erforderlich ist und weil zweitens die Klemmpratze 47 in Richtung zur Stirnfläche 83 geneigt angeordnet ist, so dass die Spanneinrichtung 43 und die Justiereinrichtung 45 nur einen sehr geringen Bauraum brauchen. Überdies ist es möglich, die Messerplatte 1 sehr klein und kompakt auszulegen. Schließlich wird durch die kompakte Bauform sichergestellt, dass die Mündung 81 des Kühl-/Schmiermittelkanals : 79 sehr nahe an den Haupt- und Nebenschneiden 31, 35 angeordnet werden kann:

## Patentansprüche

1. Reibahle mit
- einem Grundkörper (62).
- mindestens einer in den Grundkörper (62) eingelassenen Nut (64),
- einer in die Nut (64) eingesetzten mindestens eine geometrisch bestimmte Schneide (31, 35) aufweisenden Messerplatte (1),
- einer die Messerplatte (1) in der Nut (64) festspannenden Spanneinrichtung (43), die eine Klemmpratze (47) und eine Spannschraube (51) umfasst, und mit
- einer Justiereinrichtung (45), mit der der Überstand zumindest einer Schneide (35, 31) der Messerplatte (1) über eine Umfangsfläche (73) oder über mindestens eine Führungsleiste (75, 77) der Reibahle (10) einstellbar ist,
**dadurch gekennzeichnet, dass** die Justiereinrichtung (45) nur eine Stellschraube (55) aufweist, die direkt oder über einen Justierteil (57) auf ein erstes Ende der Messerplatte (1) einwirkt, und dass die Messerplatte (1) mit ihrem zweiten Ende unmittelbar am Grund (65) der Nut (64) oder an einer versiegelten zweiten Justiereinrichtung anliegt, und dass die Klemmpratze (47) der Spanneinrichtung (43) eine Spannlippe (49) aufweist, die in eine geneigte Spannnut (15) der Messerplatte (1) eingreift und deren der Spannschraube (51) abgewandte Kante gegenüber einer parallel zur Drehachse (63) der Reibahle (10) verlaufenden gedachten Horizontalen (87) unter einem Winkel (β) von ca. 10° geneigt ist.

2. Reibahle nach Anspruch 1, **dadurch gekennzeichnet, dass** die Justiereinrichtung (45) näher an der Stirnseite (83) der Reibahle (10) angeordnet ist, als die Spanneinrichtung (43).

3. Reibahle nach Anspruch 1 oder 2, **dadurch gekennzeichnet, dass** die Klemmpratze (47) gegenüber einer senkrecht zur Drehachse (63) der Reibahle (10) verlaufenden gedachten Linie (61) geneigt ist, wobei deren Spannlippe (49) näher zur Stirnseite (83) der Reibahle (10) angeordnet ist als die Spannschraube (51).

4. Reibahle nach einem der Ansprüche 1 bis 3, **dadurch gekennzeichnet, dass** das Querschnittsprofil der Nut (64) an den Querschnitt der Messerplatte (1) angepasst ist.

5. Reibahle nach einem der Ansprüche 1 bis 4, **dadurch gekennzeichnet, dass** die Nut (64) eine Seitenfläche (67) aufweist, die der Anlage der Messerplatte (1) unter Wirkung der Spanneinrichtung (43) dient.

6. Reibahle nach einem der Ansprüche 1 bis 5, **dadurch gekennzeichnet, dass** sich der Grund (65) der Nut (64) an die Seitenfläche (67) unter einem Winkel > 90° anschließt und unter einem Winkel von der Seitenfläche (67) in Richtung auf die Drehachse (63) der Reibahle (10) abfällt, der dem Freiwinkel der in die Nut (64) eingesetzten Messerplatte (1) entspricht.

7. Reibahle nach einem der Ansprüche 1 bis 6, **dadurch gekennzeichnet, dass** der Grund (65) über einen Freistich in die Seitenfläche (67) der Nut (64) übergeht.

8. Reibahle nach einem der Ansprüche 1 bis 7, **dadurch gekennzeichnet, dass** die Nut (64) an ihrem der Stirnseite (83) der Reibahle (10) abgewandten Ende einen Anschlag für die Messerplatte (1) aufweist.

9. Reibahle nach einem der Ansprüche 1 bis 8, **dadurch gekennzeichnet, dass** die Nut (64) in einem nicht-spanenden Verfahren herstellbar ist.

## Claims

1. Reamer comprising
- a main body (62),
- at least one groove (64) let into the main body (62),
- a cutter plate (1), which is inserted in the groove (64) and has at least one geometrically defined cutting edge (31, 35),
- a clamping device (43), which clamps the cutter plate (1) in the groove (64) and comprises a clamping claw (47) and a clamping screw (51), and comprising
- an adjusting device (45), by means of which the projection of at least one cutting edge (35, 31) of the cutter plate (1) over a circumferential surface (73) or over at least one guide strip (75, 77) of the reamer (10) can be adjusted,
**characterized in that** the adjusting device (45) has only one setscrew (55), which acts directly or via an adjusting part (57) upon a first end of the cutter plate (1), and **in that** the cutter plate (1), through its second end, bears directly on the base (65) of the groove (64) or on a sealed second adjusting device, and **in that** the clamping claw (47) of the clamping device (43) has a clamping lip (49), which engages in a slanting clamping groove (15) of the cutter plate (1) and whose edge facing away from the clamping screw (51) is inclined at an angle (β) of approximately 10° relative to a notional horizontal (87) extending parallel to the axis of rotation (63) of the reamer (10).

2. Reamer according to claim 1, **characterized in that** the adjusting device (45) is arranged closer to the front end (83) of the reamer (10) than is the clamping device (43).

3. Reamer according to either of claims 1 or 2, **characterized in that** the clamping claw (47) is inclined relative to a notional line (61) extending perpendicularly relative to the axis of rotation (63) of the reamer (10), the clamping lip (49) of which clamping claw being arranged closer to the front end (83) of the reamer (10) than is the clamping screw (51).

4. Reamer according to any one of claims 1 to 3, **characterized in that** the cross-sectional profile of the groove (64) matches the cross-section of the cutter plate (1).

5. Reamer according to any one of claims 1 to 4, **characterized in that** the groove (64) has a side face (67) which serves to support the cutter plate (1) subjected to the action of the clamping device (43).

6. Reamer according to any one of claims 1 to 5, **characterized in that** the base (65) of the groove (64) adjoins the side face (67) at an angle > 90° and is inclined away from the side face (67), in the direction of the axis of rotation (63) of the reamer (10), at an angle which corresponds to the clearance angle of the cutter plate (1) inserted in the groove (64).

7. Reamer according to any one of claims 1 to 6, **characterized in that** the base (65) merges, via an undercut, into the side face (67) of the groove (64).

8. Reamer according to any one of claims 1 to 7, **characterized in that** the groove (64), at its end facing away from the front end (83) of the reamer (10), has a stop for the cutter plate (1).

9. Reamer according to any one of claims 1 to 8, **characterized in that** the groove (64) can be produced in a non-machining process.

## Revendications

1. Alésoir, comprenant
- un corps de base (62),
- au moins une rainure (64) mortaisée dans le corps de base (62),
- une lame (1) insérée dans la rainure (64), présentant au moins un tranchant (31, 35) défini géométriquement,
- un dispositif de serrage (43) fixant la lame (1) en la serrant dans la rainure (64), lequel dispositif comprend une patte de blocage (47) et une vis de serrage (51), et comprenant
- un dispositif d'ajustage (45), permettant de régler le dépassement d'au moins un tranchant (35, 31) de la lame (1) au-delà d'une surface circonférentielle (73) ou d'au moins une barre de guidage (75, 77) de l'alésoir (10),
**caractérisé en ce que** le dispositif d'ajustage (45) ne présente qu'une vis de réglage (55), qui agit directement ou par l'intermédiaire d'une pièce d'ajustage (57) sur une première extrémité de la lame (1), et que la lame (1) repose par sa deuxième extrémité directement au fond (65) de la rainure (64) ou sur un deuxième dispositif d'ajustage scellé et que la patte de blocage (47) du dispositif de serrage (43) présente une lèvre de serrage (49), qui vient en prise dans une rainure de serrage (15) inclinée de la lame (1) et dont le bord opposé à la vis de serrage (51) est incliné d'un angle (β) d'environ 10° par rapport à une horizontale (87) imaginaire s'étendant parallèlement à l'axe de rotation (63) de l'alésoir (10).

2. Alésoir selon la revendication 1, **caractérisé en ce que** le dispositif d'ajustage (45) est disposé plus près du côté frontal (83) de l'alésoir (10) que le dispositif de serrage (43).

3. Alésoir selon la revendication 1 ou 2, **caractérisé en ce que** la patte de blocage (47) est inclinée par rapport à une ligne (61) imaginaire s'étendant perpendiculairement à l'axe de rotation (63) de l'alésoir (10), sa lèvre de serrage (49) étant disposée plus près du côté frontal (83) de l'alésoir (10) que la vis de serrage (51).

4. Alésoir selon l'une des revendications 1 à 3, **caractérisé en ce que** le profil de section transversale de la rainure (64) est adapté à la section transversale de la lame (1).

5. Alésoir selon l'une des revendications 1 à 4, **caractérisé en ce que** la rainure (64) présente une surface latérale (67), qui sert à l'appui de la lame (1) sous l'action du dispositif de serrage (43).

6. Alésoir selon l'une des revendications 1 à 5, **caractérisé en ce que** le fond (65) de la rainure (64) fait suite à la surface latérale (67) en formant un angle > 90° et s'incline à partir de la surface latérale (67) en direction de l'axe de rotation (63) de l'alésoir (10) en formant un angle qui correspond à l'angle de dépouille de la lame (1) insérée dans la rainure (64).

7. Alésoir selon l'une des revendications 1 à 6, **caractérisé en ce que** le fond (65) passe à la surface latérale (67) de la rainure (64) par l'intermédiaire d'un dégagement.

8. Alésoir selon l'une des revendications 1 à 7, **caractérisé en ce que** la rainure (64) présente, à son extrémité opposée au côté frontal (83) de l'alésoir (10), une butée pour la lame (1).

9. Alésoir selon l'une des revendications 1 à 8, **caractérisé en ce que** la rainure (64) peut être produite par un usinage sans enlèvement de copeaux.
